(19) Europäisches Patentamt / European Patent Office / Office européen des brevets

(11) **EP 4 324 793 A1**

(12) **EUROPEAN PATENT APPLICATION**
published in accordance with Art. 153(4) EPC

(43) Date of publication:
**21.02.2024 Bulletin 2024/08**

(21) Application number: **21933207.9**

(22) Date of filing: **11.10.2021**

(51) International Patent Classification (IPC):
$C01G\ 53/00$ (2006.01)     $H01M\ 4/36$ (2006.01)
$H01M\ 4/505$ (2010.01)     $H01M\ 4/525$ (2010.01)
$H01M\ 10/052$ (2010.01)     $H01M\ 10/0562$ (2010.01)

(52) Cooperative Patent Classification (CPC):
C01G 53/00; H01M 4/36; H01M 4/505;
H01M 4/525; H01M 10/052; H01M 10/0562;
Y02E 60/10

(86) International application number:
**PCT/JP2021/037628**

(87) International publication number:
**WO 2022/201609 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.03.2021  JP 2021047832**

(71) Applicant: **JX Metals Corporation
Tokyo 105-8417 (JP)**

(72) Inventor: **TAMURA,Tomoya
Kitaibaraki-shi, Ibaraki 319-1535 (JP)**

(74) Representative: **Yeadon IP Limited
Nexus
Discovery Way
Leeds LS2 3AA (GB)**

(54) **POSITIVE ELECTRODE ACTIVE MATERIAL FOR ALL-SOLID-STATE LITHIUM ION BATTERIES, POSITIVE ELECTRODE FOR ALL-SOLID-STATE LITHIUM ION BATTERIES, ALL-SOLID-STATE LITHIUM ION BATTERY, AND METHOD FOR PRODUCING POSITIVE ELECTRODE ACTIVE MATERIAL FOR ALL-SOLID-STATE LITHIUM ION BATTERIES**

(57)     A positive electrode active material for all-solid lithium ion batteries including a core positive electrode active material particle and a coating layer, the core positive electrode active material particle being represented by a composition shown in the following formula (1):

$$Li_aNi_bCo_cMn_dO_e \qquad (1)$$

in which formula (1), $1.0 \leq a \leq 1.05$, $0.8 \leq b \leq 0.9$, $1.8 \leq e \leq 2.2$, $b + c + d = 1$;
wherein the coating layer is an oxide of Li and Nb, and
a specific surface area X ($m^2/g$) of the positive electrode active material and a Nb content Y (mass%) in the positive electrode active material satisfy a relationship of the following formula (2):

$$0.65 \leq Y/X \leq 1.20 \quad (2).$$

**All-Solid lithium Ion Battery**

| Negative Electrode Layer | Solid Electrolyte Layer | Positive Electrode Layer |
|---|---|---|

FIG.1

**Description**

FIELD OF THE INVENTION

The present invention relates to a positive electrode active material for all-solid lithium ion batteries, a positive electrode for all-solid lithium ion batteries, an all-solid lithium ion battery, and a method for producing positive electrode active material for all-solid lithium ion batteries.

BACKGROUND OF THE INVENTION

With rapidly spreading of information relational devices and communication devices such as personal computers, video cameras, and mobile phones in recent years, development of batteries used as their power sources has been emphasized. Among the batteries, lithium ion secondary batteries are attracting attention in terms of high energy density. There is also a need to improve energy density and battery characteristics for lithium rechargeable batteries in large applications such as automotive and other power sources and for road leveling.

However, in the case of lithium-ion batteries, the electrolyte is mostly an organic compound, and even if a flame-retardant compound is used, the risk of fire cannot be completely eliminated. All-solid lithium-ion batteries with a solid electrolyte have been attracting attention in recent years as an alternative candidate for such liquid-based lithium-ion batteries. Among them, all-solid lithium-ion batteries with sulfides such as $Li_2S-P_2S_5$ or lithium halide added as a solid electrolyte are becoming the mainstream.

In all-solid lithium-ion batteries using sulfide-based solid electrolytes, the reaction between the positive electrode active material and the solid electrolyte results in the formation of a high-resistance layer, which causes a decrease in output. A method of coating the surface of the positive electrode active material with Li composite oxide is known as a means of suppressing the formation of this high-resistance layer. A typical Li composite oxide for coating the surface of positive electrode active material is LiNbOs, which shows high ionic conductivity.

Patent Literature 1 discloses an all-solid battery having a positive electrode active material having an oxide positive electrode active material and a coating portion made of a lithium niobate compound formed on the surface of the oxide positive electrode active material, and a solid electrolyte layer containing a sulfide solid electrolyte material. $LiNiO_2$ is used as said oxide positive electrode active material, and $LiNbO_3$ is coated on the oxide positive electrode active material with an alkoxide solution.

Patent document 2 discloses an active material composite powder having an active material and lithium niobate adhered to the surface of the active material, and having a BET specific surface area S [$m^2/g$] of greater than 0.93 and less than 1.44.

Patent document 3 discloses an all-solid lithium battery using a lithium ion-conductive solid electrolyte as the electrolyte, wherein the lithium ion-conductive solid electrolyte is sulfide-based and the surface of the positive electrode active material is coated with a lithium ion-conductive oxide. The core particles of the positive electrode active material are made of lithium ion conductive oxide. LiCoO is used as the core particle of said positive electrode active material, and the core particle is coated with $LiNbO_3$ in alkoxide solution.

CITATION LIST

Patent Literatures

[Patent Literature 1] Japanese Patent Application Publication No. 2010-225309A
[Patent Literature 2] Japanese Patent Application Publication No. 2015-56307A
[Patent Literature 3] Japanese Patent No. 4982866B

SUMMARY OF THE INVENTION

In Patent Literatures 1-3, materials such as LiCoO, NiCoMn with a molar ratio of 1:1:1, or $LiNiO_2$ are used as the core particles of positive electrode active materials. These literatures do not describe the technology for producing so-called high nickel products, which are ternary (Li(Ni, Co, Mn)$O_2$) positive electrode active materials with Ni ratio exceeding 80 mol%.

However, in NiCoMn-based positive electrode active materials, which have a so-called high nickel composition with a Ni ratio of 80 mol% or more, coating with oxides of Li and Nb, such as $LiNbO_3$, results in higher resistance.

The present invention has been made to solve the above-mentioned problems and to provide a low-resistance NiCoMn-based positive electrode active material for all-solid lithium ion batteries, having a so-called high nickel composition with a Ni ratio of 80 mol% or more. It is another object of the present invention to provide a positive electrode for all-solid lithium ion batteries, an all-solid lithium ion battery, and a method for producing a positive electrode active material for all-solid lithium ion batteries using said positive electrode active material for all-solid lithium ion batteries.

The present invention completed based on the above findings is defined by the following aspects 1 to 7.

1. A positive electrode active material for all-solid lithium ion batteries comprising a core positive electrode active material particle and a coating layer, the core positive electrode active material particle being represented by a composition shown in the following formula (1):

$$Li_aNi_bCo_cMn_dO_e \qquad (1)$$

in which formula (1), $1.0 \leq a \leq 1.05$, $0.8 \leq b \leq 0.9$, $1.8 \leq e \leq 2.2$, $b + c + d = 1$;

wherein the coating layer is an oxide of Li and Nb, and
a specific surface area X ($m^2/g$) of the positive electrode active material and a Nb content Y (mass%) in the positive electrode active material satisfy a relationship of the following formula (2):

$$0.65 \leq Y/X \leq 1.20 \qquad (2).$$

2. The positive electrode active material for all-solid lithium ion batteries according to the aspect 1, wherein the positive electrode active material for all-solid lithium ion batteries has a 50% cumulative volume particle size D50 of 3 to 7 $\mu$m.

3. The positive electrode active material for all-solid lithium ion batteries according to the aspect 1 or 2, wherein the coating layer comprises $LiNbO_3$.

4. A positive electrode for all-solid lithium ion batteries, comprising the positive electrode active material for all-solid lithium ion batteries according to any one of the aspects 1 to 3.

5. An all-solid lithium ion battery comprising a positive electrode layer comprising the positive electrode for all-solid lithium ion batteries according to the aspect 4, a negative electrode layer, and a solid electrolyte layer.

6. A method for producing a positive electrode active material for all-solid lithium ion batteries, the method comprising the steps of:

preparing a core positive electrode active material particle being represented by a composition shown in the following formula (1):

$$Li_aNi_bCo_cMn_dO_e \qquad (1)$$

in which formula (1), $1.0 \leq a \leq 1.05$, $0.8 \leq b \leq 0.9$, $1.8 \leq e \leq 2.2$, $b + c + d = 1$; and
forming a coating layer consisting of an oxide of Li and Nb on a surface of the core positive electrode active material particle by a rolling fluidized bed apparatus using an alkoxide solution containing Li and Nb.

7. The method for producing a positive electrode active material for all-solid lithium ion batteries according to the aspect 6,
wherein the alkoxide solution is a solution containing (1) any one of methoxylithium, ethoxylithium, and isopropoxylithium as a solute lithium source, (2) any one of pentamethoxyniobium, pentaethoxyniobium, and pentaisopropoxyniobium as a niobium source, and (3) any one of ethanol, methanol, and isopropanol as a solvent.

According to the present invention, it is possible to provide a low-resistance NiCoMn-based positive electrode active material for all-solid lithium ion batteries, having a so-called high nickel composition with a Ni ratio of 80 mol% or more. Also, according to the present invention, it is possible to provide a positive electrode for all-solid lithium ion batteries, an all-solid lithium ion battery, and a method for producing a positive electrode active material for all-solid lithium ion batteries using said positive electrode active material for all-solid lithium ion batteries.

BRIEF DESCRIPTION OF THE DRAWINGS

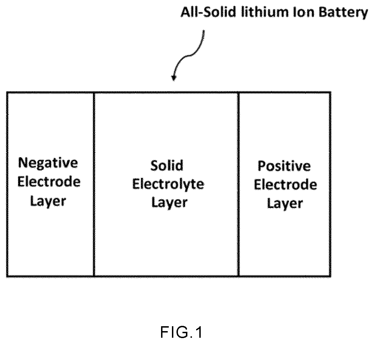

FIG. 1 is a schematic view of an all-solid lithium ion battery according to an embodiment of the present invention.

DETAILED DESCRIPTION OF THE INVENTION

Hereinafter, embodiments of the present invention will be described with reference to the drawing. However, the present invention is not limited to these embodiments, and various changes, modifications, and improvements may be made based on knowledge of one of ordinary skill in the art, without departing from the scope of the present invention.

(Positive Electrode Active Material for All-Solid Lithium Ion Batteries)

The positive electrode active material for all-solid lithium ion batteries in an embodiment of the present invention includes core a positive electrode active material particle and a coating layer. The core positive electrode active material particle is represented by a composition shown in the following formula (1):

$$Li_aNi_bCo_cMn_dO_e \qquad (1)$$

in which formula (1), $1.0 \le a \le 1.05$, $0.8 \le b \le 0.9$, $1.8 \le e \le 2.2$, $b + c + d = 1$.

In the core positive electrode active material particle, "a", which indicates the lithium composition in the above formula (1), is controlled to be $1.0 \le a \le 1.05$. Since "a" indicating lithium composition is 1.0 or more, reduction of nickel due to lithium deficiency can be suppressed. Also, since "a" indicating lithium composition is 1.05 or less, residual alkali components such as lithium carbonate and lithium hydroxide on the surface of the core positive electrode active material particle, which can be a resistance component when the battery is made, can be suppressed.

The core positive electrode active material particle has a so-called high nickel composition, where "b", which indicates the nickel composition in the above formula (1), is controlled to be $0.8 \le b \le 0.9$. Since "b", which indicates nickel composition, is 0.8 or higher, good battery capacity of all-solid lithium ion batteries can be obtained.

In the core positive electrode active material particles, the sum of "b", which indicates nickel composition, "c", which indicates the cobalt composition, and "d", which indicates the manganese composition, in the above formula (1) satisfies $b + c + d = 1$. In other words, it is controlled to $0.1 \le c + d \le 0.2$. Therefore cycle characteristics are improved and the expansion and contraction behavior of the crystal lattice due to insertion and desorption of lithium with charging and discharging can be reduced. If the "c + d" is less than 0.1, it is difficult to obtain the above cycle characteristics and expansion and contraction behavior, and if the "c + d" exceeds 0.2, the amount of cobalt and manganese added may be too large, resulting in a large reduction in initial discharge capacity, or may be disadvantageous in terms of cost.

The core positive electrode active material particles are mostly in the form of secondary particles in which a plurality of primary particles are agglomerated, and may be in the form of primary particles that are partially in a non-agglomerated state as secondary particles. There is no particular limitation on the shape of the primary particles constituting the secondary particles and the primary particles existing alone, and they may be of various shapes, such as an approximately spherical shape, an approximately elliptical shape, an approximately plate shape, an approximately needle shape, and the like. The form of agglomeration of multiple primary particles is also not particularly limited, and may be in various forms, such as agglomerating in a random direction, or agglomerating radially almost evenly from the center to form approximately spherical or elliptical secondary particles.

When the core positive electrode active material particles contain lithium hydroxide, which is excess lithium generated in the manufacturing process, etc., it is preferable that the lithium hydroxide content be 1.5 mass% or less, and it is more preferable that the content be 1.0 mass% or less. If the lithium hydroxide content exceeds 1.5 mass% in the core positive electrode active material particles, the lithium hydroxide is easily oxidized and decomposed to generate gas when the positive electrode active material is charged in a high temperature environment.

When the core positive electrode active material particles contain lithium carbonate, which is excess lithium generated in the manufacturing process, etc., it is preferable that the content of said lithium carbonate is 1.5% or less by mass, and it is more preferable that the content is 1.0% or less by mass. If the lithium carbonate content in the core positive electrode active material particles exceeds 1.5 mass%, the lithium carbonate is easily oxidized and decomposed to generate gas when the positive electrode active material is charged in a high temperature environment.

The content of lithium hydroxide and lithium carbonate in the core positive electrode active material particles described above can be determined by the neutralization titration method. Lithium hydroxide and lithium carbonate as excess lithium existing on the surface of lithium metal composite oxide particles dissolve in water, and hydroxide ion and carbonate ion are ionized from lithium ion, respectively. These ionized anions can be titrated with inorganic acid, etc., which makes it possible to separate and quantify lithium hydroxide and lithium carbonate.

It is preferable that the moisture content in the core positive electrode active material particles be 0.10 mass% or less, and it is more preferable that it be 0.05 mass% or less. If the moisture content in the core positive electrode active material particles exceeds 0.10% by mass, it may damage the metal elements constituting the positive electrode and degrade various battery characteristics. The dry weight method, Karl Fischer titration method, distillation method, etc. can be used to measure the moisture content in the core positive electrode active material particles.

The coating layer is an oxide of Li and Nb. By coating the surface of the core positive electrode active material particles with a coating layer of such composition, the reaction that occurs at the interface between the core positive electrode active material particles and the solid electrolyte is suppressed. Therefore, deterioration of the core positive electrode active material particles can be suppressed. The oxide of Li and Nb that constitutes the coating layer includes $LiNbO_3$.

In the positive electrode active material for all-solid lithium ion batteries according to an embodiment of the present invention, a specific surface area X ($m^2/g$) of the positive electrode active material and a Nb content Y (mass%) in the positive electrode active material satisfy a relationship of the following formula (2):

$$0.65 \leq Y/X \leq 1.20 \quad (2).$$

If the coating layer, which is an oxide of Li and Nb, can be applied to the surface of the core positive electrode active material particles as completely and as thinly as possible, the resistance component of the battery can be reduced and the output characteristics can be improved. More precisely, if the coating layer of oxides of Li and Nb can cover the entire surface of the core positive electrode active material particles as much as possible, the resistance increase due to the interface reaction between the solid electrolyte and the positive electrode active material when exposed to high potential during charging can be suppressed. In addition, if the coating layer, which is an oxide of Li and Nb, is formed as thin as possible on the surface of the core positive electrode active material particles, the migration of Li ions in the coating layer during charging and discharging will be shortened, and the diffusion transfer resistance can also be reduced. As mentioned above, this resistance is particularly problematic for positive electrode active materials with a so-called high nickel composition in which the Ni ratio is 80 mol% or more. From this viewpoint, in the positive electrode active material of the embodiment of the present invention having a high nickel composition, by controlling Y/X, which is the ratio of the Nb content Y (mass %) in the positive electrode active material to the specific surface area X ($m^2/g$) of the positive electrode active material, to $0.65 \leq Y/X \leq 1.20$, a NiCoMn-based positive electrode active material with low resistance is obtained. If Y/X is less than 0.65, there are many uncoated portions, which may cause direct contact between the solid electrolyte and the positive electrode active material, resulting in the formation of a high resistance layer. If Y/X exceeds 1.20, the coating layer becomes thicker, which may cause a problem of increased resistance to diffusion transfer of Li ions. Y/X, which is the ratio of the Nb content Y (mass %) in the positive electrode active material to the specific surface area X ($m^2/g$) of the positive electrode active material, is preferably $0.65 \leq Y/X \leq 1.0$, and more preferably $0.65 \leq Y/X \leq 0.75$.

It is preferred that the 50% cumulative volume particle size D50 of the positive electrode active material for all-solid lithium ion batteries is 3 to 7 $\mu$m. Here, 50% cumulative volume particle size D50 is the volume particle size at 50% accumulation in the volume-based cumulative particle size distribution curve. When the 50% cumulative volume particle size D50 of the positive electrode active material for all-solid lithium ion batteries is 3 $\mu$m or more, the specific surface area is suppressed and the amount of Li and Nb oxide coverage can be reduced. When the 50% cumulative volume particle size D50 of positive electrode active material for all-solid lithium-ion batteries is 7 $\mu$m or less, the specific surface area can be suppressed to be excessively small. It is more preferable that the 50% cumulative volume particle size D50 of positive electrode active material for all-solid lithium ion batteries is 3 to 6 $\mu$m, and even more preferable that it is 4 to 5 $\mu$m. The above 50% cumulative volume particle size D50 can be measured by Microtrac's laser diffraction particle size analyzer "MT3300EXII".

(Method for Producing Positive Electrode Active Material for All-Solid Lithium Ion Batteries)

Next, a method for producing a positive electrode active material for all-solid lithium ion batteries according to an embodiment of the present invention will be described in detail. The method of producing positive electrode active material for all-solid lithium-ion batteries according to the embodiment of the present invention first prepares core positive electrode active material particles represented by the composition shown in the following formula (1):

$$Li_aNi_bCo_cMn_dO_e \quad (1)$$

in which formula (1), $1.0 \leq a \leq 1.05$, $0.8 \leq b \leq 0.9$, $1.8 \leq e \leq 2.2$, $b + c + d = 1$.

The method for producing the core positive electrode active material particles is not particularly limited and can be adjusted accordingly based on known manufacturing methods. For example, first, a NiCoMn composite hydroxide with a Ni composition of 0.8 to 0.9 in mole ratio is prepared. Next, the composite hydroxide is dry-mixed with a Li source (Li carbonate, Li hydroxide, etc.) using a Henschel mixer or the like, with the mixing ratio of each raw material adjusted, and then calcined at a temperature of 700 to 800°C for 12 to 24 hours to obtain a calcined body. After that, if necessary, the calcined body can be crushed using, for example, a pulverizer to obtain core positive electrode active material particles.

Next, the coating solution used for surface coating of the core positive electrode active material particles by the rolling fluidized bed apparatus is prepared. An alkoxide solution containing Li and Nb is used as the coating solution. Using the alkoxide solution containing Li and Nb as the coating solution, a coating layer consisting of oxides of Li and Nb is formed on the surface of the core positive electrode active material particles by a rolling fluidized bed apparatus using a wet process. By surface coating of core positive electrode active material particles using a rolling fluidized bed apparatus, particles constituting the coating layer are coated as thinly as possible over the entire surface of the core positive electrode active material particles. This makes it possible to suppress the reaction between the positive electrode active material and the solid electrolyte and to reduce the diffusion transfer resistance within the coating layer. Also, at a certain film thickness, the coating state of the coating layer changes from partial to full coverage. Aiming for complete coverage near this critical point as much as possible will improve the output of the all-solid battery. The inventor also has found that when an alkoxide solution is used as the coating solution, a gel due to partial hydrolysis is generated immediately after coating, which made it easier to cover the surface and thus obtain the coating layer as described above.

The alkoxide solution used as coating solution is preferably a solution containing (1) any one of methoxylithium, ethoxylithium, and isopropoxylithium as a solute lithium source, (2) any one of pentamethoxyniobium, pentaethoxyniobium, and pentaisopropoxyniobium as a niobium source, and (3) any one of ethanol, methanol, and isopropanol as a solvent. According to this configuration, the coating layer formed on the surface of the core positive electrode active material particles by the rolling fluidized bed apparatus can be formed as thin as possible over the entire surface better. As for the $LiNbO_3$ concentration of the alkoxide solution, it is preferable that it be less than 5 mass%. According to this configuration, the formation of the coating layer is gradual, and it is possible to form the coating layer as thin as possible over the entire surface more favorably.

The rolling fluidized bed equipment is equipped with a rotor at the bottom, which can bring the particles in the equipment into a fluidized state by aspirating the feed gas. Specifically, the core positive electrode active material particles are made fluid in a rolling fluidized bed apparatus, the core positive electrode active material particles are sprayed with an alkoxide solution of the coating material, and then dried to form granules. Next, the resulting granules are calcined in air or in an inert atmosphere to form a coating layer on the surface of the core positive electrode active material particles.

In the coating process using the rolling fluidized bed apparatus, the ratio of the alkoxide solution of the coating material to the core positive electrode active material particles is preferably in the range of 2:1000 to 1:100 by mass for the coating material (solute component): core positive electrode active material particles. In the method described above, the air intake volume to bring the core positive electrode active material particles into a fluid state preferably is about 0.15 to 0.3 $m^3$/min.

In the coating process using the rolling fluidized bed apparatus, an alkoxide solution containing the coating material is coated on the surface of the core positive electrode active material particles by setting the intake air temperature in the rolling fluidized bed apparatus to at least room temperature and less than 80°C, for example. Firing is then performed by heating at 200 to 350°C for 1 to 5 hours in an oxygen atmosphere or in air. In this way, a positive electrode active material for all-solid lithium ion batteries can be obtained, having core positive electrode active material particles and a coating layer formed on the surface of the core positive electrode active material particles.

(Positive Electrode for All-Solid Lithium Ion Batteries and Lithium Ion Battery)

An all-solid lithium ion battery including a positive electrode layer, a solid electrolyte layer, and a negative electrode layer can be prepared by forming the positive electrode from the positive electrode active material for all-solid lithium ion batteries according to an embodiment of the present invention, and using the positive electrode as that positive electrode layer. The solid electrolyte layer and the negative electrode layer that form the all-solid lithium ion battery according to the embodiment of the present invention are not particularly limited, and can be formed of known materials, and can have known structures as shown in FIG. 1.

The positive electrode layer of the all-solid lithium ion batteries may be obtained by forming a layered positive electrode mixture obtained by mixing the positive electrode active material for the all-solid lithium ion batteries according to the embodiment of the present invention with a solid electrolyte. The content of the positive electrode active material in the positive electrode layer is, for example, preferably 50% by mass or more and 99% by mass or less, and more preferably 60% by mass or more and 90% by mass or less.

The positive electrode mixture may further contain a conductive aid. The conductive aid that can be used herein includes carbon materials, metal materials, or a mixture thereof. The conductive aid may contain, for example, at least one element selected from the group consisting of carbon, nickel, copper, aluminum, indium, silver, cobalt, magnesium, lithium, chromium, gold, ruthenium, platinum, beryllium, iridium, molybdenum, niobium, osmium, rhodium, tungsten and zinc. The conductive aid is preferably a metal simple substance, mixture or compound containing a highly conductive carbon single substance, carbon, nickel, copper, silver, cobalt, magnesium, lithium, ruthenium, gold, platinum, niobium, osmium or rhodium. Examples of the carbon material that can be used herein include carbon black such as Ketjen black, acetylene black, DENKA BLACK, thermal black and channel black; graphite; carbon fiber; activated carbon; and the like.

The average thickness of the positive electrode layer of the all-solid lithium ion battery is not particularly limited, and it can be appropriately designed according to the purpose. The average thickness of the positive electrode layer of the all-solid lithium ion battery may be, for example, 1 $\mu$m to 100 $\mu$m, or may be 1 $\mu$m to 10 $\mu$m.

The method for forming the positive electrode layer of the all-solid lithium ion battery is not particularly limited, and it can be appropriately selected according to the purpose. Examples of the method for forming the positive electrode layer of the all-solid lithium ion battery include a method of compression-molding the positive electrode active material for all-solid lithium ion batteries, and the like.

The negative electrode layer of the all-solid lithium ion battery may be obtained by forming a known negative electrode active material for all-solid lithium ion batteries in a form of a layer. Further, the negative electrode layer may be obtained by forming a negative electrode mixture in a form of a layer, which is obtained by mixing the known negative electrode active material for all-solid lithium ion batteries with a solid electrolyte. The content of the negative electrode active material in the negative electrode layer is, for example, preferably 10% by mass or more and 99% by mass or less, and more preferably 20% by mass or more and 90% by mass or less.

The negative electrode layer may contain a conductive aid, as in the positive electrode layer. The same materials as those described for the positive electrode layer can be used for the conductive aid. Examples of the negative electrode active material include carbon materials such as artificial graphite, graphite carbon fiber, resin baked carbon, pyrolytic vapor growth carbon, cokes, mesocarbon microbeads (MCMB), furfuryl alcohol resin baked carbon, polyacene, pitch-based carbon fiber, vapor-grown carbon fiber, natural graphite, hardly graphitizable carbon, etc., or a mixture thereof. Used as the negative electrode material may be, for example, a metal itself such as metallic lithium, metallic indium, metallic aluminum, and metallic silicon, or an alloy combined with other elements or compounds.

The average thickness of the negative electrode layer of the all-solid lithium ion battery is not particularly limited, and it can be appropriately selected depending on the purpose. The average thickness of the negative electrode layer of the all-solid lithium ion battery may be, for example, 1 $\mu$m to 100 $\mu$m, or 1 $\mu$m to 10 $\mu$m.

The method for forming the negative electrode layer of the all-solid lithium ion battery is not particularly limited, and it can be appropriately selected depending on the purpose. Examples of the method for forming the negative electrode layer of the all-solid lithium ion battery include, for example, a method of compression-molding negative electrode active material particles, a method of vapor-depositing a negative electrode active material, and the like.

The solid electrolyte may employ a known solid electrolyte for all-solid lithium ion batteries. Even if an oxide-based solid electrolyte is used as the solid electrolyte, it is possible to reduce the resistance in all-solid lithium ion batteries using the positive electrode active material of the embodiment of the present invention. Especially when sulfide solid electrolytes are used as solid electrolytes, the conventional reaction between the positive electrode active material and solid electrolyte results in the formation of a high-resistance layer, which causes a decrease in output. According to the positive electrode active material of this embodiment, since the entire positive electrode active material is coated as much as possible, the formation of a high resistance layer can be well suppressed even in all-solid lithium ion batteries with sulfide solid electrolytes. In addition, by forming the coating layer as thin as possible, the diffusion transfer resistance can also be reduced because the migration of Li ions in the coating layer during charging and discharging is shortened. These two effects reduce resistance. The solid electrolyte may be a lithium-containing compound containing lithium and at least one element selected from niobium, tantalum, silicon, phosphorus, and boron.

Examples of the oxide-based solid electrolyte include $LiTi_2(PO_4)_3$, $Li_2O$-$B_2O_3$-$P_2O_5$, $Li_2O$-$SiO_2$, $Li_2O$-$B_2O_3$, and $Li_2O$-$B_2O_3$-$ZnO$, and the like.

Examples of the sulfide-based solid electrolyte includes $LiI$-$Li_2S$-$P_2S_5$, $LiI$-$Li_2S$-$B_2S_3$, $Li_3PO_4$-$Li_2S$-$Si_2S$, $Li_3PO_4$-$Li_2S$-$SiS_2$, $LiPO_4$-$Li_2S$-$SiS$, $LiI$-$Li_2S$-$P_2O_5$, $LiI$-$Li_3PO_4$-$P_2S_5$, $Li_3PS_4$, and $Li_2S$-$P_2S_5$, and the like

Examples of the solid electrolyte using the lithium-containing compound including lithium and at least one element selected from niobium, tantalum, silicon, phosphorus and boron include $LiNbOs$, or $Li_{1.3}Al_{0.3}Ti_{0.7}(PO_4)_3$, $Li_{1+x+y}A_xTi_{2-x}Si_yP_{3-y}O_{12}$ in which A = Al or Ga, $0 \le x \le 0.4$, $0 < y \le 0.6$; $[(B_{1/2}Li_{1/2})_{1-z}C_z]TiO_3$ in which B = La, Pr, Nd, Sm, C = Sr or Ba, $0 \le x \le 0.5$; $Li_5La_3Ta_2O_{12}$, $Li_7La_3Zr_2O_{12}$, $Li_6BaLa_2Ta_2O_{12}$, $Li_3PO_{(4-3/2w)}N_w$($w < 1$), and $Li_{3.6}Si_{0.6}P_{0.4}O_4$, and the like, and $LiI$, $LiI$-$Al_2O_3$, $LiN_3$, $Li_3N$-$LiI$-$LiOH$, and the like.

The average thickness of the solid electrolyte layer of the all-solid lithium ion battery is not particularly limited, and it can be appropriately designed according to the purpose. The average thickness of the solid electrolyte layer of the all-solid lithium ion battery may be, for example, 50 $\mu$m to 500 $\mu$m, or 50 $\mu$m to 100 $\mu$m.

The method for forming the solid electrolyte layer of the all-solid lithium ion battery is not particularly limited, and it can be appropriately selected depending on the purpose. Examples of the method of forming the solid electrolyte layer of the all-solid lithium ion battery include sputtering using a solid electrolyte target material, and compression molding of the solid electrolyte, and the like.

Other members making up the all-solid lithium ion battery are not particularly limited, and they can be appropriately selected according to the purpose. Examples of the other members include a positive electrode current collector, a negative electrode current collector, and a battery case.

The size and structure of the positive electrode current collector are not particularly limited, and they can be appropriately selected according to the purpose.

Examples of materials for the positive electrode current collector include die steel, stainless steel, aluminum, aluminum alloys, titanium alloys, copper, gold, and nickel.

Examples of the shape of the positive electrode current collector include a foil shape, a plate shape, and a mesh shape.

The average thickness of the positive electrode current collector may be, for example, 10 $\mu$m to 500 $\mu$m, or 50 $\mu$m to 100 $\mu$m.

The size and structure of the negative electrode current collector are not particularly limited, and they can be appropriately selected according to the purpose.

Examples of materials for the negative electrode current collector include die steel, gold, indium, nickel, copper, stainless steel.

Examples of the shape of the negative electrode current collector include a foil shape, a plate shape, and a mesh shape.

The average thickness of the negative electrode current collector may be, for example, 10 $\mu$m to 500 $\mu$m, or 50 $\mu$m to 100 $\mu$m.

The battery case is not particularly limited, and it can be appropriately selected according to the purpose. Examples of the battery case include known laminate films that can be used for conventional all-solid batteries. Examples of laminate films include resin laminate films and films obtained by vapor-depositing metal on the resin laminate films.

The shape of the battery is not particularly limited, and it can be appropriately selected according to the purpose. Examples include cylindrical, square, button, coin, and flat types.

EXAMPLES

The following examples are provided for better understanding of the invention and its advantages, but the invention is not limited to these examples.

(Examples 1 to 6, Comparative Examples 1 to 6)

First, NiCoMn composite hydroxides with Ni compositions ranging from 0.82 to 0.9 in mole ratio were prepared. Next, the composite hydroxide was dry-mixed with Li hydroxide in a Henschel mixer by adjusting the mixing ratio of each raw material, and then calcined at 700 to 780°C for 12 to 24 hours to obtain a calcined body. The calcined body was then pulverized to obtain the core positive electrode active material particles.

Next, the coating solution used for surface coating of the core positive electrode active material particles by the rolling fluidized bed apparatus was prepared. An alkoxide solution was used as the coating solution, which is an ethanol solution of ethoxylithium and pentaethoxyniobium. Specifically, core positive electrode active material particles were placed in a fluidized state in a rolling fluidized bed apparatus, and an alkoxide solution of the coating material was sprayed onto the core positive electrode active material particles and dried to form granules. Next, the resulting granules were calcined in air or in an inert atmosphere to form a coating layer on the surface of the core positive electrode active material particles.

In wet coating process by rolling fluidized bed equipment, the concentration of alkoxide solution, the ratio of alkoxide solution to core positive electrode active material particles, the intake air volume and intake temperature in the rolling fluidized bed apparatus were adjusted accordingly based on the target amount of $LiNbO_3$ coating (Nb content Y in the positive electrode active material), respectively. For example, in Example 1, the concentration of alkoxide solution is 4.1 wt% in terms of $LiNbO_3$, and 125 g of alkoxide solution is sprayed at a rate of 2.0 g/min for 800 g of core positive electrode active material particles. The intake air volume in the rolling fluidized bed equipment was set at 0.2 $m^3$/min and the intake air temperature is 90°C.

The positive electrode active material was then calcined by heating for 3 hours in an oxygen atmosphere at the temperatures listed in Table 1. Thus, for each of Examples 1 to 6 and Comparative Examples 1 to 6, a sample of positive electrode active material for all-solid lithium ion batteries was obtained, having core positive electrode active material particles and a coating layer formed on the surface of the core positive electrode active material particles.

(Composition of positive electrode active material, Nb content Y in positive electrode active material)

After weighing 0.2 g of each obtained positive electrode active material sample (powder) and decomposing it by the alkali fusion method, a composition analysis was conducted using an inductively coupled plasma optical emission spectrometer (ICP-OES) "PS7800" manufactured by Hitachi High-Technologies Corporation. The Nb content Y in the positive electrode active material was also measured by said composition analysis.

(50% Cumulative Volume particle size D50)

100 mg of a sample (powder) of each positive electrode active material obtained was dispersed by irradiating the sample with an ultrasonic wave of 40 W for 60 seconds at a flow rate of 50% using a Microtrac laser diffraction particle size distribution analyzer "MT 3300 EXII", and the particle size distribution was then measured to obtain a cumulative particle size distribution curve on a volume basis. Subsequently, in the obtained cumulative particle size distribution curve, the volume particle size at 50% cumulative volume was defined as the 50% cumulative volume particle size D50 of the positive electrode active material powder.

(Specific Surface Area X of positive electrode Active Material)

1.5 g of each obtained positive electrode active material sample (powder) was weighed into a glass cell, set in a degassing apparatus, filled the glass cell with nitrogen gas, and then heat-treated at 150°C for 1 hour in a nitrogen gas atmosphere to degas it. The glass cell containing the degassed sample (powder) was then set in Quantachrome's "Monosorb" specific surface area measuring device, and the specific surface area X was measured by the BET method (one-point method) while flowing He: 70at% - $N_2$: 30at% mixed gas as adsorption gas.

(Initial Resistance of All-Solid Batteries)

The positive electrode active material: 75 mg and sulfide solid electrolyte material $Li_3PS4$: 25 mg were mixed to obtain the positive electrode compound. In addition, 80 mg of sulfide solid electrolyte material $Li_3PS_4$: 80 mg was put inside a battery test cell with 10 mm diameter and pressed at a pressure of 37 MPa using a pellet forming machine to form the solid electrolyte layer. 10 mg of positive electrode alloy was put on top of said solid electrolyte layer and pressed at a pressure of 330 MPa to produce a composite layer. Next, the obtained composite layer of solid electrolyte layer and positive electrode active material layer was turned upside down, and on the solid electrolyte layer side, a Li foil (10 mm diameter x 0.1 mm thickness) and In foil (9 mm diameter x 0.1 mm thickness) were laminated to a SUS plate and pressed at a pressure of 20 MPa to form a Li-In negative electrode layer The Li-In negative electrode layer was made by pressing at a pressure of 20 MPa. This produced a laminate consisting of a positive electrode active material layer, a solid electrolyte layer, and a Li-In negative electrode layer in that order. The laminate was then placed in a battery test cell made of SUS304 and subjected to a constraining pressure of 2.5 Nm to make an all-solid secondary battery.

Next, in the all-solid secondary battery, the battery was charged to 3.7 V (vs. Li-In), and AC impedance measurement was performed in the cell after charging. The initial resistance was then obtained from the arc obtained from the Nyquist plot.

The above production conditions and test results are shown in Table 1.

[Table 1]

| | Core positive electrode active material particle composition: LiNi$_b$Co$_c$Mn$_d$O$_2$ (mol%) | | | Coating layer composition | Calcination temperature (°C) | D50 (μm) | Nb content: Y (mass%) | Specific surface area:X (m²/g) | X/Y | All-solid cell Initial Resistance (Ω) |
|---|---|---|---|---|---|---|---|---|---|---|
| | Ni | Co | Mn | | | | | | | |
| Example 1 | 82 | 15 | 3 | LiNbO$_3$ | 300 | 3.4 | 0.4 | 0.62 | 0.65 | 43 |
| Example 2 | 82 | 15 | 3 | LiNbO$_3$ | 350 | 3.4 | 0.68 | 0.67 | 1.01 | 64 |
| Example 3 | 82 | 15 | 3 | LiNbO$_3$ | 275 | 5.4 | 0.28 | 0.39 | 0.72 | 46 |
| Example 4 | 82 | 15 | 3 | LiNbO$_3$ | 300 | 5.4 | 0.47 | 0.40 | 1.16 | 54 |
| Example 5 | 90 | 7 | 3 | LiNbO$_3$ | 300 | 5.6 | 0.22 | 0.34 | 0.66 | 109 |
| Example 6 | 90 | 7 | 3 | LiNbO$_3$ | 325 | 5.7 | 0.33 | 0.36 | 0.91 | 153 |
| Comp.1 | 82 | 15 | 3 | LiNbO$_3$ | 400 | 2.4 | 1.09 | 1.747 | 0.62 | 293 |
| Comp.2 | 82 | 15 | 3 | LiNbO$_3$ | 300 | 5.3 | 1.06 | 0.3485 | 3.04 | 187 |
| Comp.3 | 82 | 15 | 3 | LiNbO$_3$ | 300 | 5.3 | 1.35 | 0.342 | 3.95 | 227 |
| Comp.4 | 82 | 15 | 3 | LiNbO$_3$ | 300 | 5.8 | 0.49 | 0.381 | 1.29 | 206 |
| Comp.5 | 85 | 10 | 5 | LiNbO$_3$ | 275 | 5.7 | 0.83 | 0.334 | 2.49 | 306 |
| Comp.6 | 90 | 7 | 3 | LiNbO$_3$ | 250 | 5.8 | 1.22 | 0.308 | 3.96 | 546 |

(Evaluation Results)

The specific surface area X (m$^2$/g) of the positive electrode active material and the Nb content Y (mass %) in the positive electrode active material of Examples 1 to 6 all satisfied the relationship in the following formula (2). Therefore, the initial resistance evaluated as an all-solid battery was kept low.

$$0.65 \leq Y/X \leq 1.20 \quad (2)$$

On the other hand, none of the positive electrode active materials of Comparative Examples 1 to 6 satisfied the relationship between the specific surface area X (m$^2$/g) of the positive electrode active material and the Nb content Y (mass %) in the positive electrode active material in the above formula (2). As a result, the initial resistance evaluated as an all-solid battery was large.

**Claims**

1. A positive electrode active material for all-solid lithium ion batteries comprising a core positive electrode active material particle and a coating layer, the core positive electrode active material particle being represented by a composition shown in the following formula (1):

$$Li_aNi_bCo_cMn_dO_e \quad (1)$$

in which formula (1), $1.0 \leq a \leq 1.05$, $0.8 \leq b \leq 0.9$, $1.8 \leq e \leq 2.2$, $b + c + d = 1$;

wherein the coating layer is an oxide of Li and Nb, and
a specific surface area X (m$^2$/g) of the positive electrode active material and a Nb content Y (mass%) in the positive electrode active material satisfy a relationship of the following formula (2):

$$0.65 \leq Y/X \leq 1.20 \quad (2).$$

2. The positive electrode active material for all-solid lithium ion batteries according to claim 1, wherein the positive electrode active material for all-solid lithium ion batteries has a 50% cumulative volume particle size D50 of 3 to 7 μm.

3. The positive electrode active material for all-solid lithium ion batteries according to claim 1 or 2, wherein the coating layer comprises LiNbO$_3$.

4. A positive electrode for all-solid lithium ion batteries, comprising the positive electrode active material for all-solid lithium ion batteries according to any one of claims 1 to 3.

5. An all-solid lithium ion battery comprising a positive electrode layer comprising the positive electrode for all-solid lithium ion batteries according to claim 4, a negative electrode layer, and a solid electrolyte layer.

6. A method for producing a positive electrode active material for all-solid lithium ion batteries, the method comprising the steps of:

preparing a core positive electrode active material particle being represented by a composition shown in the following formula (1):

$$Li_aNi_bCo_cMn_dO_e \quad (1)$$

in which formula (1), $1.0 \leq a \leq 1.05$, $0.8 \leq b \leq 0.9$, $1.8 \leq e \leq 2.2$, $b + c + d = 1$; and
forming a coating layer consisting of an oxide of Li and Nb on a surface of the core positive electrode active material particle by a rolling fluidized bed apparatus using an alkoxide solution containing Li and Nb.

7. The method for producing a positive electrode active material for all-solid lithium ion batteries according to claim 6, wherein the alkoxide solution is a solution containing (1) any one of methoxylithium, ethoxylithium, and isopropoxylithium as a solute lithium source, (2) any one of pentamethoxyniobium, pentaethoxyniobium, and pentaisopropoxyniobium as a niobium source, and (3) any one of ethanol, methanol, and isopropanol as a solvent.

All-Solid lithium Ion Battery

| Negative Electrode Layer | Solid Electrolyte Layer | Positive Electrode Layer |
| --- | --- | --- |

FIG.1

## INTERNATIONAL SEARCH REPORT

| International application No. |
| --- |
| **PCT/JP2021/037628** |

### A. CLASSIFICATION OF SUBJECT MATTER

*C01G 53/00*(2006.01)i; *H01M 4/36*(2006.01)i; *H01M 4/505*(2010.01)i; *H01M 4/525*(2010.01)i; *H01M 10/052*(2010.01)i; *H01M 10/0562*(2010.01)i

FI: H01M4/525; H01M4/505; H01M4/36 C; H01M10/052; H01M10/0562; C01G53/00 A

According to International Patent Classification (IPC) or to both national classification and IPC

### B. FIELDS SEARCHED

Minimum documentation searched (classification system followed by classification symbols)

C01G53/00; H01M4/36; H01M4/505; H01M4/525; H01M10/052; H01M10/0562

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2020-47383 A (JX NIPPON MINING & METALS CORP.) 26 March 2020 (2020-03-26) examples | 6-7 |
| A | | 1-5 |
| Y | JP 2015-201252 A (TOYOTA MOTOR CORP.) 12 November 2015 (2015-11-12) paragraphs [0039]-[0049] | 6-7 |
| A | JP 2020-64799 A (JX NIPPON MINING & METALS CORP.) 23 April 2020 (2020-04-23) examples | 1-7 |
| A | JP 2017-84674 A (JX NIPPON MINING & METALS CORP.) 18 May 2017 (2017-05-18) claims, examples | 1-7 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **07 December 2021** | **21 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/037628**

| Patent document cited in search report | | | Publication date (day/month/year) | Patent family member(s) | | | Publication date (day/month/year) |
|---|---|---|---|---|---|---|---|
| JP | 2020-47383 | A | 26 March 2020 | JP examples | 6633161 | B1 | |
| JP | 2015-201252 | A | 12 November 2015 | US paragraphs [0052]-[0063] CN KR 10-2015-0115673 | 2015/0287985 104979532 | A1 A A | |
| JP | 2020-64799 | A | 23 April 2020 | (Family: none) | | | |
| JP | 2017-84674 | A | 18 May 2017 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010225309 A
- JP 2015056307 A
- JP 4982866 B